# EUROPÄISCHE PATENTSCHRIFT

(11) **EP 3 485 498 B1**
(45) Veröffentlichungstag und Bekanntmachung des Hinweises auf die Patenterteilung: **20.03.2024**
(21) Anmeldenummer: 17749361.6
(22) Anmeldetag: 27.06.2017
(51) Int. Cl.: H01B 7/04, F16L 11/08, H01B 7/18

(54) **UNTERWASSERARBEITSKABEL**
SUBMARINE WORKING CABLE
CÂBLE DE TRAVAIL SOUS-MARIN

(30) Priorität: 13.07.2016 DE 102016008410
(43) Veröffentlichungstag der Anmeldung: 22.05.2019
(73) Patentinhaber: Norddeutsche Seekabelwerke GmbH, 26954 Nordenham (DE)
(72) Erfinder: SAUERBIER, Ralf, 26935 Stadland (DE); MEYENBURG, Thomas, 26215 Wiefelstede (DE); MÜLLER-SCHÜTZE, Sven, 26954 Nordenham (DE); LÜNNEMANN, Guido, 26349 Jade (DE)
(74) Vertreter: Meissner Bolte Partnerschaft mbB
(86) Internationale Anmeldenummer: PCT/EP2017/000749
(87) Internationale Veröffentlichungsnummer: WO 2018/010829

(56) Entgegenhaltungen:
- WO-A1-2006/054092
- WO-A1-2008/075965
- WO-A1-2016/080840
- WO-A2-2011/008568
- DE-A1- 3 808 049
- JP-B2- 5 512 439

## Beschreibung

Die Erfindung betrifft ein Unterwasserarbeitskabel gemäß dem Oberbegriff des Anspruchs 1.

Unterwasserarbeitskabel müssen mehrere Aufgaben erfüllen. Sie dienen als Tragseil als Art eines Kranseils sowie zur Energie- oder Informationsübertragung. Solche Unterwasserarbeitskabel werden beispielsweise eingesetzt für ferngesteuerte Geräte für Unterwasserarbeiten, beispielsweise Tauchroboter. Im Fachjargon werden solche Unterwasserarbeitskabel auch als "Umbilicals" und/oder "dynamische Arbeitskabel" bezeichnet.

Weil Unterwasserarbeitskabel auch zum Teil recht hohe Zuglasten aufnehmen müssen, um das daran befestigte Unterwassergerät tragen zu können, sind sie mit einem Mantel aus mindestens einer Lage mit Seil- und/oder Drahtsträngen versehen. Diese umgeben üblicherweise eine Seele des Unterwasserarbeitskabels, das Leiter oder Hohlstränge zu Versorgungszwecken, vor allem Energie-, Signal- und Datenübertragungszwecken, aufweist. Weil insbesondere fernbediente Unterwassergeräte häufig in sehr hohen Tiefen von 4.000 m und mehr eingesetzt werden, reduziert das Eigengewicht langer Unterwasserversorgungskabel infolge der als Tragorgan dienenden Stränge aus Stahl oder sonstigen metallischen Materialien die Nutzlast desselben.

Die WO 2008/075965 A1 betrifft ein Unterwasserarbeitskabel mit Fluidröhrchen, Drähten bzw. Leitern, Füllmaterial und wenigstens ein lastaufnehmendes Element, die mit kontinuierlich wechselnden Richtungen verseilt sind. Die genannten Komponenten sind gegebenenfalls mit einem Verstärkungsband oder -tape aus einem Polypropylen umgeben. Durch die Verseilung in wechselnden Richtungen soll die Torsionsfestigkeit des bekannten Unterwasserarbeitskabels verbessert werden, beispielsweise um die Verlegung desselben zu vereinfachen.

Aus der WO 2011/008568 A2 sind eine Vielzahl unterschiedlich aufgebauter Unterwasserkompositkabel bekannt, die Drähte aufweisen, die mindestens zum Teil über nichtmetallische Stränge aus unterschiedlichen Materialien verfügen.

Die WO 2016/080840 A1 offenbart ein Kabel für Bohrlöcher, das über Stränge aus gesponnenen Kohlefasern verfügt.

Aus der JP 5512439 B2 ist ein Rohr bekannt, das mit in unterschiedlichen Richtungen gewickelten Kohlefasern verstärkt ist.

Der Erfindung liegt die Aufgabe zugrunde, ein Unterwasserarbeitskabel zu schaffen, das eine hohe Nutzlast und geringe Dehnung bei einfachem Aufbau aufweist.

Ein Unterwasserarbeitskabel zur Lösung dieser Aufgabe weist die Merkmale des Anspruchs 1 auf. Bei diesem Unterwasserarbeitskabel mit einer Seele und einem diese umgebenden Mantel ist es vorgesehen, dass mindestens ein Teil der Stränge des Mantels aus einem hochzugfesten nichtmetallischen Material gebildet ist. Solche hochzugfesten nichtmetallischen Stränge, die wenigstens zum Teil aus Kohlefasern gebildet sind, sind leichter als Stränge aus metallischem Material, beispielsweise Drähte oder Seile aus Stahl. Die Festigkeit, auch das Dehnverhalten, der Stränge aus hochzugfestem nichtmetallischen Material ist vergleichbar mit metallischem Material. Dadurch ist das erfindungsgemäße Unterwasserarbeitskabel leichter als Unterwasserarbeitskabel mit einem Mantel aus vollständig metallischem Material, ohne dass die mechanischen Eigenschaften wie Zugfestigkeit geringer sind. Ein solches leichteres Unterwasserarbeitskabel ermöglicht höhere Lasten und lässt sich in größeren Tiefen und/oder mit schwereren Unterwassergeräten einsetzen.

Beim Unterwasserarbeitskabel ist dem oder jedem nichtmetallischen Strang eine Beschichtung und/oder Umhüllung zugeordnet. Die Umhüllung bzw. Beschichtung schützt den jeweiligen nichtmetallischen Strang und/oder das mindestens eine Bündel aus hochzugfesten, nicht metallischen Fasern des jeweiligen Strangs vor äußeren Einflüssen, wie mechanischen Beeinträchtigungen. Alternativ ist es vorgesehen, dass die massiven, nichtmetallischen Stränge von einer als Schutzschicht dienenden Umhüllung vollständig umgeben sind. Die massiven nichtmetallischen Stränge sind somit in der Umhüllung geschützt eingebettet.

Vorzugsweise ist die Schutzschicht oder Umhüllung zwischen der Lage aus mehreren nichtmetallischen Strängen und der äußeren Lage aus metallischen Strängen angeordnet. Dadurch werden Beeinträchtigungen der nichtmetallischen Stränge durch die äußeren metallischen Stränge vermieden.

Die Stränge des Mantels aus hochzugfestem nichtmetallischen Material können massiv sein oder aus einem Bündel aus einer Vielzahl von Fasern, beispielsweise Kohle- bzw. Kohlenstofffasern, gebildet sein. Alternativ oder zusätzlich ist es denkbar, die Stränge aus hochzugfestem, nichtmetallischen Material, vorzugsweise Kohle- bzw. Kohlenstofffasern, hohl, also nach Art eines Röhrchens mit einem kreisringförmigen Querschnitt, der vorzugsweise eine relativ dünne Wandung aufweist, auszubilden. Die Abmessung eines solchen hohlen Strangs ist so gewählt, dass dieser die gesamte Seele umgibt. Die Seele kann Leiter und/oder Hohlstränge zur Versorgung, Signal- und/oder Datenübertragung aufweisen. Bei den Leitern kann es sich um elektrische, vorzugsweise metallische, Leiter und/oder optische Leiter, beispielsweise Glasfaserleiter, handeln. Die Hohlstränge der Seele sind bevorzugt als Röhrchen und/oder Schläuche für Hydraulikflüssigkeit, Pressluft, Wasser oder ähnlichem ausgebildet.

Vorzugsweise ist es vorgesehen, die Stränge des Zugträgers des Mantels einerseits aus metallischem Material (metallische Stränge) und andererseits aus hochzugfestem nichtmetallischen Material, im Folgenden nichtmetallische Stränge genannt, zu bilden. Der Mantel besteht dadurch aus einem Materialmix. Dabei ist weiter bevorzugt vorgesehen, die metallischen Stränge außen um die nichtmetallischen Stränge anzuordnen. Dadurch sind die nichtmetallischen Stränge von den gegen äußere Einflüsse unempfindlicheren metallischen Strängen umgeben. Die äußere Lage der metallischen Stränge schützt dadurch die innere Lage aus nichtmetallischen Strängen.

Die nichtmetallischen Stränge weisen bevorzugt einen massiven Querschnitt auf. Solche nichtmetallischen Stränge können aus einem massiven Monofilament oder auch als Multifilament aus mehreren gebündelten Fasern gebildet sein. Mehrere massive Mono- oder Multifilamentstränge sind in mindestens einer Lage um die Seele herum ringartig angeordnet. Dabei können die einzelnen Stränge parallel zueinander verlaufen, und zwar parallel zur Längsmittelachse des Unterwasserarbeitskabels, aber auch um die Seele herum verseilt sein. Es können sowohl eine Lage als auch mehrere benachbarte Lagen aus jeweils mehreren ringförmig nebeneinanderliegend orientierten nichtmetallischen Strängen um die Seele herum angeordnet sein.

Beim besonders vorteilhaft ausgestalteten Unterwasserarbeitskabel ist der jeweilige nichtmetallische Strang aus einer Vielzahl von in einer Matrix eingebetteten und/oder von der Matrix zusammengehaltenen Kohlefasern bzw. Kohlenstofffasern gebildet. So entstehen formstabile nichtmetallische Stränge, die über mit metallischen Strängen vergleichbare Eigenschaften verfügen. Vorzugsweise sind alle nichtmetallischen Stränge so gebildet. Durch die Einbettung der Kohlefasern bzw. Kohlenstofffasern in die Matrix werden alle Kohlenstofffasern des jeweiligen nichtmetallischen Strangs zusammengehalten bzw. von der Matrix verbunden zu einem quasi massiven, stangenartigen nichtmetallischen Strang. Dadurch können die einzelnen Kohle- oder Kohlenstofffasern in der Matrix gleichmäßig belastet werden. Es entsteht so eine mindestens größtenteils homogene Lastverteilung auf die einzelnen Kohle- bzw. Kohlenstofffasern im jeweiligen nichtmetallischen Strang. Das führt zu einer größtmöglichen Belastbarkeit des jeweiligen nichtmetallischen Strangs.

Vorzugsweise ist eine Vielzahl insbesondere gleicher Kohlefasern oder Kohlenstofffasern gebündelt in der Matrix eingebettet und/oder von dieser zusammengehalten. Dabei verlaufen die gebündelten Kohle- oder Kohlenstofffasern insbesondere in Längsrichtung des jeweiligen nichtmetallischen Strangs und/oder mindestens größtenteils parallel zueinander. Gegebenenfalls können die einzelnen Kohle- oder Kohlenstofffasern des jeweiligen Strangs auch ganz oder teilweise verseilt sein.

Die die einzelnen Kohle- oder Kohlenstofffasern des jeweiligen nichtmetallischen Strangs einbettende oder zusammenhaltende Matrix besteht vorzugsweise aus Kunststoff, insbesondere aus Epoxydharz. Daraus lassen sich nichtmetallische Stränge beispielsweise durch Pultrusion herstellen. Mit dem Pultrusionsverfahren lassen sich Stränge großer Länge kontinuierlich und ununterbrochen herstellen. Hierbei wird um die durch eine Form laufenden Kohlefasern herum die Matrix gebildet und dabei die Fasern in der Matrix eingebettet.

Umgeben sind alle Stränge mindestens einer Lage von der mindestens einen Lage metallischer Stränge. Dabei kann ggf. zwischen der äußeren Lage metallischer Stränge und der Lage nichtmetallischer Stränge eine Zwischen- oder Schutzschicht angeordnet sein oder alternativ bzw. zusätzlich jeder Strang von einer Umhüllung umgeben sein, die eine Schutzschicht jedes Strangs bildet.

Eine vorteilhafte Ausgestaltungsmöglichkeit des Unterwasserarbeitskabels sieht es vor, dass die mindestens eine Zwischen- oder Schutzschicht bzw. Umhüllung aus einem elastisch verformbaren Kunststoff bzw. Elastomer gebildet ist. Dabei kann es sich um beispielsweise Polyurethan oder auch ein Material auf Kautschukbasis handeln. Solche Materialien führen zu einer weichen Zwischen- und Schutzschicht bzw. Umhüllung, wobei die elastischen Eigenschaften, insbesondere der Weichheitsgrad durch eine entsprechende Materialauswahl den Anforderungen entsprechend anpassbar sind.

Des Weiteren ist es bevorzugt vorgesehen, alle metallischen Stränge, insbesondere der äußeren Armierung des Unterwasserarbeitskabels, aus mono- oder multifilamentartigen Drähten oder Seilen mit massivem Querschnitt zu bilden. Mehrere solcher metallischer Stränge bilden dann eine äußere Lage des Unterwasserarbeitskabels, das den mindestens einen nichtmetallischen Strang umgibt. Die Drähte oder Seile zur Bildung der metallischen Stränge können unverseilt oder auch verseilt die äußere Lage des Unterwasserarbeitskabels bilden.

Es ist denkbar, den wenigstens einen nichtmetallischen Strang ganz oder alternativ nur zum Teil aus Kohlenstoff bzw. Carbon zu bilden.

Bevorzugte Ausführungsbeispiele der Erfindung werden nachfolgend anhand der Zeichnung näher erläutert. Diese zeigen:
Fig. 1 einen Querschnitt durch ein Unterwasserarbeitskabel gemäß einem ersten Ausführungsbeispiel der Erfindung, und
Fig. 2 einen Querschnitt durch ein zweites Ausführungsbeispiel eines Unterwasserarbeitskabels.

Die in den Figuren gezeigten Unterwasserarbeitskabel 10 dienen mindestens als Tragseil für in den Figuren nicht gezeigte unter Wasser in großen Tiefen von gegebenenfalls über 4.000 m operierende, ferngesteuerte Geräte. Solche Unterwassergeräte hängen an jeweils einem Unterwasserarbeitskabel 10. Die gezeigten Unterwasserarbeitskabel 10 dienen vorzugsweise aber auch dazu, ferngesteuerte Unterwassergeräte mit Energie zu versorgen und Informationen, Daten sowie Steuersignale zwischen den Unterwassergeräten und ihren Mutterstationen, beispielsweise Schiffe, Arbeitsplattformen oder dergleichen, auszutauschen. Bei den Unterwassergeräten kann es sich z. B. um Unterwasserarbeitsgeräte oder auch Unterwasserbeobachtungsgeräte handeln.

Das Unterwasserarbeitskabel 10 jedes in den Figuren gezeigten Ausführungsbeispiels verfügt über eine innere Seele 11 und einen diese vollständig umgebenden äußeren Mantel. Bevorzugt verfügt die Seele 11 über alle zur Energieversorgung und/oder und zum Daten- bzw. Informationsaustausch erforderlichen Leiter und Hohlstränge. Leiter können solche sein, die elektrische Energie, Daten, Signale und Informationen übertragen. Hohlstränge sind Rohre, Röhrchen und/oder Schläuche, durch die Hydraulikflüssigkeit, Druckluft oder auch sonstige flüssige und gasförmige Medien für Arbeitswerkzeuge, zur Fortbewegung und zur Ausführung von Steuerbefehlen des am Unterwasserarbeitskabel 10 hängenden Unterwassergeräts erforderlich sind.

Der Mantel des Unterwasserarbeitskabels 10 dient als Zugträger, der das Gewicht des am Unterwasserarbeitskabel 10 hängenden Unterwassergeräts und auch das Eigengewicht des Unterwasserarbeitskabels 10 aufnimmt, so dass es auch als Tragseil oder gegebenenfalls nur als Tragseil dienen kann. Wenn das Unterwassergerät in großen Tiefen eingesetzt wird, kann infolge der großen Länge des Unterwasserarbeitskabels 10 schon das Eigengewicht desselben eine hohe Zugbelastung auf den Mantel ausüben. Der Mantel schützt aber auch das Unterwasserarbeitskabel 10 vor äußeren Einwirkungen, insbesondere durch den Wasserdruck, der vor allem in großen Tiefen einen erheblichen Druck ausübt.

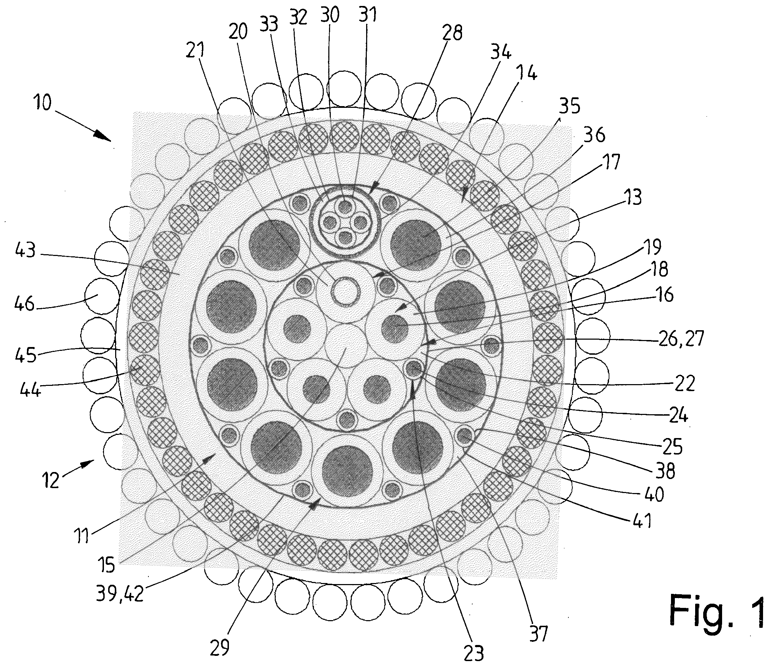

Die Seele 11 des Unterwasserarbeitskabels 10 der Fig. 1 weist eine Innenseele 13 und eine Außenseele 14 auf.

Die Innenseele 13 verfügt über einen mittigen Hohlstrang 15, dessen Längsmittelachse auf der Längsmittelachse des Unterwasserarbeitskabels 10 liegt. Der Hohlstrang 15 kann zum Transport von flüssigen oder gasförmigen Medien, beispielsweise Luft, Gas, Druckluft, Hydrauliköl oder andere Flüssigkeiten oder auch Proben aus dem Meer oder vom Meeresgrund dienen. Um den Hohlstrang 15 herum ist eine Lage von fünf im Außendurchmesser gleichen Strängen 16, 17 angeordnet. Vier gleiche Stränge 16 verfügen über einen elektrisch leitenden Kern 18, der von einer Isolierung 19 umgeben ist. Der Kern 18 kann aus einem massiven monofilen Draht aus beispielsweise Kupfer gebildet sein, aber auch aus mehreren Kupferlitzen, also multifilamentartig ausgebildet sein. Die Litzen können gleich gerichtet nebeneinanderliegen, aber auch verdrillt oder verseilt sein. Die Isolierung besteht vorzugsweise aus einem nicht leitenden Material, wie z. B. Kunststoff. Ein einziger anderer Strang 17 verfügt über einen Kern, der aus einem ggf. elektrisch leitfähigen Röhrchen 20 mit einer äußeren umlaufenden Isolierung 21 gebildet ist. Das elektrisch leitfähige Röhrchen 20 des Strangs 17 kann genauso wie die Stränge 16 zur Übertragung elektrischer Energie und/oder Daten, Steuerbefehlen oder sonstigen Informationen dienen. Im Inneren des Röhrchens 20 können in der Fig. 1 nicht dargestellte optische Leiter, z. B. Lichtwellenleiter, vorzugsweise zur Daten- und/oder Signalübertragung, angeordnet sein. Alternativ können durch das Innere des Röhrchens 20 flüssige Medien, wie z. B. Hydrauliköl, Wasser oder dergleichen, aber auch gasförmige Medien wie z. B. Luft, Druckluft oder ähnliches Gas, strömen.

In äußeren Zwickeln 22 zwischen benachbarten Strängen 16 bzw. Strängen 16 und 17 sind dünnere Stränge 23 angeordnet, die über einen Kern in Gestalt eines elektrischen Leiters 24 verfügen, der vollständig von einer elektrischen Isolierung 25 umgeben ist. Die im Vergleich zu den Strängen 16 und 17 einen kleineren Durchmesser aufweisenden Stränge 23 sind in ihrem Außendurchmesser so bemessen, dass ihre äußerste Stelle oder ihr äußerster Punkt auf einen Hüllkreis 26 um die äußeren Stellen bzw. Punkte der Stränge 16 und 17 liegen. Auf diesem Hüllkreis 26 befindet sich beim in der Fig. 1 gezeigten Unterwasserarbeitskabel 10 ein Wickel 27 aus vorzugsweise einem ein- oder mehrlagigen Band oder Tape aus nicht leitendem Material. Der Wickel 27 umgibt die Innenseele 13 des Unterwasserarbeitskabels 10 und hält dabei die Stränge 15, 16, 17 und 23 der Innenseele 13 zusammen.

Die Außenseele 14 verfügt beim in der Fig. 1 gezeigten Unterwasserarbeitskabel 10 über zehn im Außendurchmesser gleiche Stränge 28, 29. Ein Strang 28 verfügt im Kern über vier gleich große und gleich ausgebildete elektrische Leiter 30 mit einer äußeren Isolierung 31. Die vier Leiter 30 sind von einem Wickel 32 aus beispielsweise einem Band aus nicht leitendem Material umgeben. Um den Wickel 32 herum ist eine vollständig geschlossene ringförmige weitere Isolierung 33 vorgesehen. Diese Isolierung 33 ist außen umgeben von einem Röhrchen 34 aus einem elektrisch leitfähigen Material, beispielsweise Kupfer.

Die übrigen Stränge 29 der Außenseele 14 sind gleich ausgebildet, bestehen nämlich aus einem Kern 35 aus einem elektrisch leitfähigen Material, beispielsweise Kupfer. Dieser Kern 35 kann massiv aus einem Draht entsprechenden Durchmessers gebildet sein, aber auch aus einer Vielzahl nebeneinanderliegender dünner Drähte bzw. Litzen, die vorzugsweise zum zylindrischen Kern 35 gebündelt sind, beispielsweise durch Verdrillen oder Verseilen. Der Kern 35 jedes Strangs 29 ist von einer geschlossenen Umhüllung umgeben, bei der es sich vorzugsweise um eine Isolierung 36 handelt.

In äußeren Zwickeln 37 zwischen benachbarten Strängen 29 oder zwischen den Strängen 28 und 29 weist auch die Außenseele 14 dünne Stränge 38 auf. Die Durchmesser der dünnen Stränge 38 sind so ausgebildet, dass die Stränge 38 und auch die Stränge 28 und 29 einen gemeinsamen Hüllkreis 39 berühren. Die insgesamt zehn kleineren Stränge 38 sind gleich ausgebildet, verfügen nämlich über einen elektrisch leitfähigen Kern 40 mit einer geschlossenen Umhüllung, bei der es sich um eine Isolierung 41 handeln kann. Auch die Außenseele 14 ist von einem auf dem Hüllkreis 39 liegenden Wickel 42 umgeben. Der Wickel 42 kann wie der Wickel 27 aus einem elektrisch nicht leitenden, also isolierenden Band, Tape oder dergleichen gebildet sein. Der Wickel 42 hält die Stränge 28, 29 und 38 der Außenseele 14 zusammen. Insbesondere fixiert der Wickel 42 die äußeren Stränge 28, 29 und 38 der Außenseele 14 um die Innenseele 13 herum.

Die Seele 11 des in der Fig. 1 gezeigten Unterwasserarbeitskabels 10 verfügt des Weiteren über eine durchgehende, zylindrische Hüllschicht 43 aus vorzugsweise einem isolierenden Material. Die gesamte Seele 11, also die Innenseite 13 und die Außenseite 14, ist von der Hüllschicht 43 vollständig umgeben bzw. bildet den äußeren Bestandteil der Seele 11.

In erfindungsgemäß besonderer Weise ist der ganz oder zumindest hauptsächlich Zuglasten aufnehmende Mantel 12 des Unterwasserarbeitskabels 10 ausgebildet. Im gezeigten Ausführungsbeispiel der Fig. 1 ist der Mantel 12 zum einen Teil aus hochzugfesten, nichtmetallischen Strängen 44 und zum anderen Teil aus metallischen Stränge 46 gebildet. Die nichtmetallischen Stränge 44 sind beim Mantel 12 der Fig. 1 in einer inneren Lage aus einer Mehrzahl dicht nebeneinanderliegender gleicher hochzugfester, nichtmetallischer Stränge 44 vorgesehen. Insbesondere weisen alle Stränge 44 der inneren Lage einen gleichen Außendurchmesser auf. Diese innere Lage aus nebeneinanderliegenden Strängen 44 umgibt die Hüllschicht 43 der Seele 11 des Unterwasserarbeitskabels 10. Alle Stränge 44 der inneren Lage des Mantels 12 sind aus dem gleichen Material, und zwar einem hochzugfesten nicht leitenden und nichtmetallischen Material, gebildet. Beispielsweise sind die Stränge 44 mindestens größtenteils aus Kohlenstoff oder Carbon als leichtes, hochzugfestes nichtmetallisches Material gebildet. Vorzugsweise bestehen alle Stränge 44 vollständig aus Kunststoff und/oder Carbon. Die Stränge 44 sind bevorzugt aus einer Vielzahl gebündelter Kohlefasern oder Kohlenstofffasern gebildet, sodass sie Multifilamente darstellen. Die Stränge 44 oder einzelne Stränge 44 können aber auch aus einem einzelnen Kohlenstoff bzw. Carbonstrang bestehen. Solche Stränge 44 sind als Monofilamente ausgebildet.

Die vorstehend beschriebenen hochzugfesten Stränge 44 aus Kohlenstoff und/oder Carbon verfügen über etwa die Zugfestigkeit von Stahl. Ihre Dehnung ist mit derjenigen von Stahl vergleichbar. Dadurch dienen auch die hochzugfesten nichtmetallischen Stränge zur Aufnahme von Zug- bzw. Traglasten. Falls die Stränge 44 multifilamentartig ausgebildet sind, also aus einer Vielzahl gebündelter Kohle- bzw. Carbonfasern bestehen, kann es vorgesehen sein, das Bündel aus Kohle- oder Carbonfaser außen von einer Umhüllung aus einem dünnen Wickel oder einer dünnen Beschichtung zur Bildung eines Hüllschlauchs zu umgeben, sodass die vielen den jeweiligen Strang 44 bildenden Fasern aus hochzugfestem Material wie z. B. Kohlenstoff bzw. Carbon zum einheitlichen, multifilamentartigen Strang 44 zusammengehalten werden.

Bevorzugt sind die hochzugfesten, nichtmetallischen Stränge 44 aus einer Vielzahl gebündelter Kohlenstoff- bzw. Kohlefasern gebildet. Vorzugsweise sind gleiche Kohlefasern zum jeweiligen hochzugfesten, nicht metallischen Strang 44 gebündelt. Die einzelnen Kohlefasern jedes Strangs 44 verlaufen entweder parallel zueinander in Längsrichtung des nichtmetallischen Strangs 44, sind also unverseilt, oder sie sind verseilt, wodurch sie spiralförmig in Längsrichtung des jeweiligen nichtmetallischen Strangs 44 verlaufen.

Die gebündelten Kohlefasern jedes nichtmetallischen Strangs 44 sind zusammengehalten durch eine Matrix. Vorzugsweise sind dazu alle Kohle- oder Kohlenstofffasern des jeweiligen nichtmetallischen Strangs 44 in der Matrix eingebettet und dadurch formstabil zusammengehalten. Die die Fasern zusammenhaltende Matrix ist bevorzugt aus Kunststoff, beispielsweise Epoxydharz, gebildet und bevorzugt im Pultrusionsverfahren hergestellt. Insbesondere ist die Matrix flexibel oder zumindest flexibler als die von der Matrix zusammengehaltenen oder in der Matrix eingebetteten Kohle- oder Kohlenstofffasern. Infolge der Verbindung, vorzugsweise Einbettung, der Kohlenstofffasern bzw. Kohlefasern in die Matrix entstehen kompakte und quasi monofile hochzugfeste, nichtmetallische Stränge 44. Die nichtmetallischen Stränge 44 sind dadurch zumindest idealerweise im Inneren völlig ausgefüllt, insbesondere durch die Matrix, wodurch sie über keine Lufteinschlüsse verfügen.

Außen um die innere Schicht aus den Strängen 44 aus hochzugfestem nichtmetallischen Material ist eine als Schutzschicht 45 dienende Zwischenschicht vorgesehen. Die Schutzschicht 45 umgibt alle Stränge 44 der ersten, inneren Lage des Mantels 12. Die Schutzschicht 45 besteht aus einem elastischen Material, vorzugsweise einem elastischen Kunststoff, beispielsweise ein Elastomer.

Die Schutzschicht 45 ist außen von dicht nebeneinanderliegenden, vorzugsweise lückenlos aneinanderliegenden, Strängen 46 aus metallischem Material wie Stahl umgeben. Diese dicht neben- bzw. aneinanderliegenden, metallischen Stränge 46 bilden eine äußere Lage des Mantels 12. Diese äußere Lage aus dicht nebeneinanderliegenden Strängen 46 bildet auch eine äußere Armierung des Unterwasserarbeitskabels 10. Dadurch ist dieses vor mechanischen äußeren Einflüssen geschützt. Damit die außenliegenden Stränge 46 aus metallischem Material ihre Orientierung beibehalten, kann es vorgesehen sein, die äußeren Stränge 46 verseilt außen um die Schutzschicht 45 anzubringen. Dabei werden die Schutzschicht 45 und die darunterliegenden Stränge 44 aus nichtmetallischem Material von den metallischen Strängen 46 nach Art eines Schutzschildes vor äußeren mechanischen Einflüssen, und zwar z. B. auch Einstichen, wirksam geschützt.

Infolge der erfindungsgemäßen Bildung des Mantels 12 des Unterwasserarbeitskabels 10 aus Strängen 44, 46 unterschiedlicher Materialien, nämlich metallischen Materialien und leichteren hochzugfesten nichtmetallischen Materialien, wie insbesondere Kohlenstoff bzw. Carbon, wird das Gewicht des Unterwasserarbeitskabels 10 reduziert. Infolgedessen nimmt die mindestens zum Großteil von den Strängen 44, 46 des äußeren Mantels 12 getragene Nutzlast des Unterwasserarbeitskabels 10 zu. Der wirksame Schutz gegen äußere Einflüsse wird dabei von den äußeren metallischen Strängen 46 gewährleistet, die vorzugsweise mit der Schutzschicht 45 die innenliegenden leichteren nichtmetallischen Stränge 44 schützen, indem sie diese nach Art von Schutzschildern umgeben. Damit die außenliegenden metallischen Stränge 46 nicht an den innenliegenden nichtmetallischen Strängen 44 scheuern, ist die ringförmige Schutzschicht 45 zwischen den äußeren metallischen Strängen 46 und den inneren nichtmetallischen Strängen 44 vorgesehen. Außerdem werden die nichtmetallischen Stränge 44 des Mantels 12 gegenüber der Seele 11 z. B. gegen Reiben geschützt durch die äußere Hüllschicht 43 der Seele 11, die vorzugsweise auch aus flexiblem Kunststoff besteht. Dadurch sind die aus hochzugfestem nichtmetallischen Material, beispielsweise Kohlenstoff bzw. Carbon, bestehenden inneren Stränge 44 des Mantels 12 zwischen der jeweils elastischen und/oder weichen Hüllschicht 43 und der Schutzschicht 45 eingebettet und somit gegen jegliche Beeinflussungen von außen geschützt. Insbesondere sind so Beeinträchtigungen der nichtmetallischen inneren Stränge 44 durch die metallischen äußeren Stränge 46 und durch Abrieb ausgeschlossen.

Beim Ausführungsbeispiel der Fig. 1 sind die untereinander gleichen Durchmesser der nichtmetallischen Stränge 44 etwas kleiner als die untereinander gleichen Durchmesser der metallischen Stränge 46. Die Durchmesser der nichtmetallischen Stränge 44 können bis zu 20% kleiner, aber auch bis zu 20% größer sein als die Durchmesser der metallischen Stränge 46. Auch können erforderlichenfalls die Durchmesser der nichtmetallischen Stränge 44 genauso groß sein wie die Durchmesser der metallischen Stränge 46.

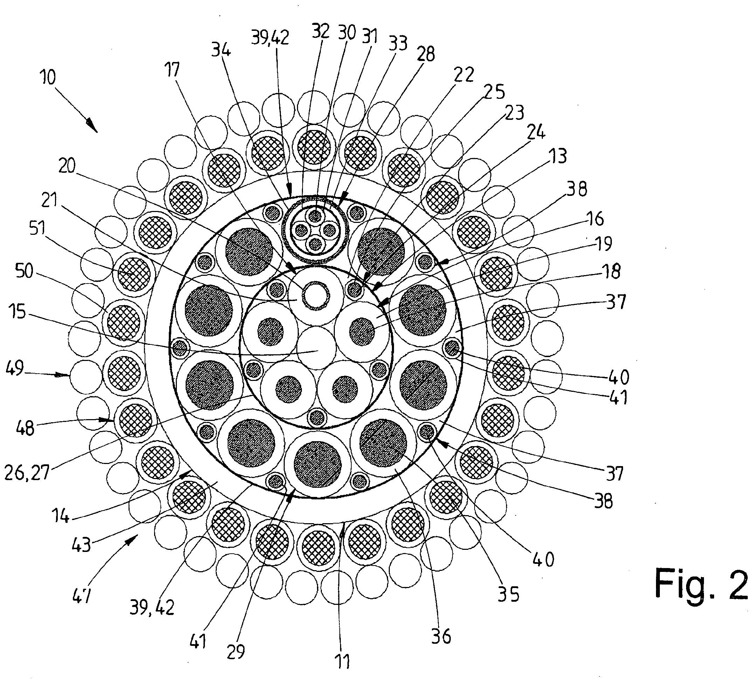

Das Unterwasserarbeitskabel 10 der Fig. 2 unterscheidet sich von demjenigen der Fig. 1 nur hinsichtlich des Mantels. Die Seele 11 ist beim Unterwasserarbeitskabel 10 der Fig. 2 genauso ausgebildet wie beim Unterwasserarbeitskabel 10 der Fig. 1. Deswegen werden für gleiche Teile gleiche Bezugsziffern verwendet und es wird insofern auf die Erläuterungen zum Unterwasserarbeitskabel 10 der Fig. 1 Bezug genommen. Im Folgenden wird deshalb nur noch der sich vom Unterwasserarbeitskabel 10 der Fig. 1 unterscheidende Mantel 47 des Unterwasserarbeitskabels 10 der Fig. 2 beschrieben.

Der Mantel 47 des Unterwasserarbeitskabels 10 der Fig. 2 verfügt über eine innere Lage aus einer Mehrzahl dicht nebeneinanderliegend um die Hüllschicht 43 herum dicht aneinanderliegend angeordnete nichtmetallische Stränge 48 und eine diese Lage aus Strängen 48 außen umgebende Lage dicht nebeneinander angeordneter Stränge 49 aus metallischem Material. Diese als Metalldrähte aus vorzugsweise korrosionsbeständigem Edelstahl ausgebildeten Stränge 49 sind so um die innere Lage aus den Strängen 48 herum angeordnet, dass die Stränge 49 ihre lückenlose dicht nebeneinanderliegende Anordnung der einzelnen metallischen Stränge 49 beibehalten. Das kann auf verschiedene Weisen geschehen, beispielsweise durch Verseilen der metallischen Stränge 49 um die innere Lage aus den nichtmetallischen Strängen 48 herum.

Die Stränge 48 des Unterwasserarbeitskabels 10 der Fig. 2 sind bevorzugt wie die Stränge 44 des Ausführungsbeispiels der Fig. 1 ausgebildet, sodass auf die Beschreibung der Stränge 44 Bezug genommen wird.

Die Stränge 48 verfügen über einen massiven Kern 51 aus der nichtmetallischen Matrix und dem darin eingebetteten einen Bündel hochzugfester nichtmetallischer Kohle bzw. Kohlestofffasern. Um jeden einzelnen Kern 51 aus einem hochzugfesten nichtmetallischen Material ist eine den Kern 51 vollständig umgebende Umhüllung 50 angeordnet. Diese Umhüllung 50 ist durch eine vollständig den jeweiligen Kern 51 umgebende äußere Beschichtung des Kerns 51 gebildet. Diese Umhüllung 50 aus einem Kunststoff, vorzugsweise einem elastischen Kunststoff, ersetzt die schlauch- oder röhrchenartige Schutzschicht 45 beim Unterwasserkabel 10 der Fig. 1. Demzufolge ist der Mantel 52 des Unterwasserarbeitskabels 10 der Fig. 2 nur zweischichtig ausgebildet, und zwar aus einer inneren Lage dicht nebeneinanderliegender hochzugfester nichtmetallischer Stränge 48 und eine äußere Lage metallischer Stränge 49. Dabei ist jeder nichtmetallische Strang 48 vor mechanischen Einflüssen geschützt durch seine eigene geschlossene Umhüllung 50, die eine Schutzschicht um jeden Kern 51 des jeweiligen nichtmetallischen Strangs 48 bildet. Der Durchmesser jedes nichtmetallischen Kerns 51 der gleichen, insbesondere im Durchmesser gleichen, Stränge 48 entspricht im Ausführungsbeispiel der Fig. 2 dem Durchmesser jedes metallischen Strangs 49. Die gleichen Durchmesser der nichtmetallischen Kerne 51 können aber auch um bis zu 20% größer oder kleiner als die gleichen Durchmesser der metallischen Stränge 49 sein.

Die vorstehend erläuterten Ausführungsbeispiele verschiedener Unterwasserarbeitskabel 10 verfügen über kreisrunde Stränge, Röhrchen, Hüllschichten, Schutzschichten, Umhüllungen und Hohlstränge. Die Erfindung eignet sich aber auch für Unterwasserarbeitskabel 10, bei denen die Stränge, Hohlstränge, Röhrchen, Hüllschichten, Schutzschichten und Umhüllungen andere Querschnitte aufweisen, beispielsweise kreissegmentartige Querschnitte oder kreisabschnittartige Querschnitte, um Zwickel zwischen den benachbarten Strängen zu vermeiden oder zu reduzieren.

Die Unterwasserarbeitskabel 10 der Fig. 1 und 2 sind mit identischen Seelen 10 dargestellt. Das bedeutet aber nicht, dass die Erfindung auf die in den Fig. 1 und 2 dargestellten Seelen 10 beschränkt ist. Die Erfindung eignet sich vielmehr für Unterwasserarbeitskabel 10 mit beliebig ausgebildeten Seelen, insbesondere Seelen, die an die an das jeweilige Unterwasserarbeitskabel gestellten Anforderungen individuell angepasst sind. Entscheidend für die Erfindung ist die erfindungsgemäße Ausbildung der Mäntel 12, 47 und 52 der Unterwasserarbeitskabel 10. Aus Gründen der Gewichtseinsparung sind die Mäntel nur zum Teil aus metallischen Strängen, insbesondere Stahlstränge oder dergleichen gebildet, indem der andere Teil des Mantels von leichteren Strängen aus einem hochfesten nichtmetallischen Material, beispielsweise Kohlefasern, Kohlenstoff bzw. Carbon, gebildet ist. Der Anteil der leichteren nichtmetallischen Stränge oder des nur einen Hohlstrangs entspricht etwa 30% bis 70%, vorzugsweise etwa 40% bis 60% des Anteils der metallischen Stränge, insbesondere Drähte. Durch diesen Materialmix aus leichten nichtmetallischen Strängen und konventionellen metallischen Strängen wird die Widerstandsfähigkeit des Unterwasserarbeitskabels 10 gegen Einflüsse von außen nicht herabgesetzt. Es werden vor allem von den äußeren metallischen Strängen die innenliegenden nichtmetallischen Stränge geschützt. Außerdem erfolgt ein Schutz der nichtmetallischen Stränge durch eine Schutz- bzw. Zwischenschicht, die entweder jeden nichtmetallischen Strang umgibt oder die gesamte Lage nichtmetallischer Stränge bzw. einen rohrartigen hochzugfesten nichtmetallischen Hohlstrang aus z. B. Kohlenstoff bzw. Carbon umgibt. Dadurch sind Beeinträchtigungen der nichtmetallischen Stränge von den zum Schutz derselben vor äußeren Einflüssen dienenden, außenliegenden metallischen Strängen ausgeschlossen.

### Bezugszeichenliste

| | | | |
|---|---|---|---|
| 10 | Unterwasserarbeitskabel | 43 | Hüllschicht |
| 11 | Seele | 44 | Strang |
| 12 | Mantel | 45 | Schutzschicht |
| 13 | Innenseele | 46 | Strang |
| 14 | Außenseele | 47 | Mantel |
| 15 | Hohlstrang | 48 | Strang |
| 16 | Strang | 49 | Strang |
| 17 | Strang | 50 | Umhüllung |
| 18 | Kern | 51 | Kern |
| 19 | Isolierung | | |
| 20 | Röhrchen | | |
| 21 | Isolierung | | |
| 22 | Zwickel | | |
| 23 | Strang | | |
| 24 | elektrischer Leiter | | |
| 25 | Isolierung | | |
| 26 | Hüllkreis | | |
| 27 | Wickel | | |
| 28 | Strang | | |
| 29 | Strang | | |
| 30 | Leiter | | |
| 31 | Isolierung | | |
| 32 | Wickel | | |
| 33 | Isolierung | | |
| 34 | Röhrchen | | |
| 35 | Kern | | |
| 36 | Isolierung | | |
| 37 | Zwickel | | |
| 38 | Strang | | |
| 39 | Hüllkreis | | |
| 40 | Kern | | |
| 41 | Isolierung | | |
| 42 | Wickel | | |

## Patentansprüche

1. Unterwasserarbeitskabel (10) mit einer Leiter und/oder Hohlstränge aufweisenden Seele (11) und einem mindestens teilweise als Zuträger dienenden und um die Seele (11) herum angeordneten Mantel (12, 47, 52), der wenigstens eine äußere Lage von metallischen Strängen (46, 49) aufweist, und mindestens ein Teil der Stränge (44, 48) des Mantels (12, 47, 52) aus einem hochzugfesten, nichtmetallischen Material gebildet ist, indem zwischen der äußeren Lage und der Seele (11) wenigstens eine Lage aus oder mit hochzugfesten nichtmetallischen Strängen (44, 48) angeordnet ist, **dadurch gekennzeichnet, dass** die nichtmetallischen Stränge (44, 48) mindestens zum Großteil aus Kohlefasern gebildet sind, die größtenteils parallel zueinander in Längsrichtung der nichtmetallischen Stränge (44, 48) verlaufen, und die nichtmetallischen Stränge (44, 48) von einer als Schutzschicht dienenden Umhüllung (50) umgeben und/oder mit einer äußeren Beschichtung versehen sind, oder der mindestens einen Lage aus mehreren nichtmetallischen Stränge (44, 48) eine Zwischenschicht und/oder Schutzschicht (45) zugeordnet ist.

2. Unterwasserarbeitskabel nach Anspruch 1, **dadurch gekennzeichnet, dass** die Stränge (46, 49; 44, 48) der einzelnen Lagen des Zugträgers einerseits als metallische Stränge (46, 49) und andererseits als nichtmetallische Stränge (44, 48) ausgebildet sind.

3. Unterwasserarbeitskabel nach Anspruch 1 oder 2, **dadurch gekennzeichnet, dass** um die Seele (11) mindestens eine Lage aus mehreren oder nur nichtmetallischen Strängen (44, 48) angeordnet ist, die von mindestens einer äußeren Lage ausschließlich metallischer Stränge (46, 49) umgeben sind.

4. Unterwasserarbeitskabel nach Anspruch 1, **dadurch gekennzeichnet, dass** zwischen der mindestens einen Lage aus mehreren nichtmetallischen Strängen (44, 48) und der äußeren Lage aus metallischen Strängen (46, 49, 55) wenigstens eine Zwischenschicht und/oder Schutzschicht (45) angeordnet ist.

5. Unterwasserarbeitskabel nach einem der vorhergehenden Ansprüche, **dadurch gekennzeichnet, dass** die nichtmetallischen Stränge (44, 48) einen massiven Querschnitt aufweisen.

6. Unterwasserarbeitskabel nach einem der vorhergehenden Ansprüche, **dadurch gekennzeichnet, dass** der mindestens eine nichtmetallische Strang (44, 48) aus in einer Matrix angeordneten Kohlefasern gebildet ist.

7. Unterwasserarbeitskabel nach Anspruch 6, **dadurch gekennzeichnet, dass** der mindestens eine nichtmetallische Strang (44, 48) aus einer Vielzahl in der Matrix eingebetteten und/oder zusammengehaltenen Kohlefasern gebildet ist.

8. Unterwasserarbeitskabel nach einem der Ansprüche 6 oder 7, **dadurch gekennzeichnet, dass** die die Kohlefasern des mindestens einen nichtmetallischen Strangs (44, 48) einbettende und/oder zusammenhaltende Matrix aus Epoxydharz gebildet ist.

9. Unterwasserarbeitskabel nach einem der vorhergehenden Ansprüche, **dadurch gekennzeichnet, dass** die metallischen Stränge (46, 49) einen massiven Querschnitt aufweisen, indem sie als Drähte aus Stahl ausgebildet sind und/oder die Zwischenschicht, Schutzschicht (45), Beschichtung und/oder Umhüllung (50) aus einem elastisch verformbaren Kunststoff bzw. Elastomer gebildet sind.

## Claims

1. Submarine working cable (10) having a core (11) with a conductor and/or hollow strands and a sheath (12, 47, 52), arranged around the core (11), serving at least partially as a tension member and having at least one outer layer of metallic strands (46, 49), and at least one portion of the strands (44, 48) of the sheath (12, 47, 52) is formed of a high tensile, non-metallic material, in that between the outer layer and the core (11) there is arranged at least one layer made of or with high-tensile non-metallic strands (44, 48), **characterized in that** the non-metallic strands (44, 48) are formed at least to a large extent from carbon fibres, which run largely parallel to one another in the longitudinal direction of the non-metallic strands (44, 48), and the non-metallic strands (44, 48) are surrounded by a wrapping (50) serving as a protective layer and/or are provided with an outer coating, or the at least one layer comprising a plurality of non-metallic strands (44, 48) is assigned an intermediate layer and/or protective layer (45).

2. The submarine working cable as claimed in claim 1, **characterized in that** the strands (46, 49; 44, 48) of the individual layers of the tension member are realized, on the one hand, as metallic strands (46, 49) and, on the other hand, as non-metallic strands (44, 48).

3. The submarine working cable as claimed in claim 1 or 2, **characterized in that** at least one layer comprising a plurality of or only non-metallic strands (44, 48) is arranged around the core (11), said strands being surrounded by at least one outer layer of exclusively metallic strands (46, 49).

4. The submarine working cable as claimed in claim 1, **characterized in that** at least one intermediate layer and/or protective layer (45) is arranged between the at least one layer comprising a plurality of non-metallic strands (44, 48) and the outer layer made of metallic strands (46, 49, 55).

5. The submarine working cable as claimed in one of the preceding claims, **characterized in that** the non-metallic strands (44, 48) have a solid cross section.

6. The submarine working cable as claimed in one of the preceding claims, **characterized in that** the at least one non-metallic strand (44, 48) is formed from carbon fibres arranged in a matrix.

7. The submarine working cable as claimed in claim 6, **characterized in that** the at least one non-metallic strand (44, 48) is formed from a plurality of carbon fibres embedded and/or held together in the matrix.

8. The submarine working cable as claimed in one of the claims 6 or 7, **characterized in that** the matrix embedding and/or holding together the carbon fibres of the at least one non-metallic strand (44, 48) is formed from epoxy resin.

9. The submarine working cable as claimed in one of the preceding claims, **characterized in that** the metallic strands (46, 49) have a solid cross section, **in that** they are realized as steel wires and/or the intermediate layer, protective layer (45), coating and/or wrapping (50) are formed from an elastically deformable plastic or elastomer.

## Revendications

1. Câble pour travaux sous-marins (10) comprenant une âme (11), qui comporte des conducteurs et/ou des brins creux, et une gaine (12, 47, 52) qui sert au moins partiellement de support de traction, qui est disposée autour de l'âme (11) et qui comporte au moins une couche extérieure de brins métalliques (46, 49), et au moins une partie des brins (44, 48) de la gaine (12, 47, 52) étant formée à partir d'un matériau non métallique à haute résistance à la traction du fait qu'au moins une couche composée de, ou comprenant des, brins non métalliques (44, 48) à haute résistance à la traction est disposée entre la couche extérieure et l'âme (11), **caractérisé en ce que** les brins non métalliques (44, 48) sont au moins en grande partie formés de fibres de carbone qui s'étendent en grande partie parallèlement les unes aux autres dans la direction longitudinale des brins non métalliques (44, 48), et les brins non métalliques (44, 48) sont entourés d'une enveloppe (50) servant de couche protectrice et/ou sont dotés d'un revêtement extérieur, ou l'au moins une couche formée de plusieurs brins non métalliques (44, 48) est associée à une couche intermédiaire et/ou une couche protectrice (45).

2. Câble pour travaux sous-marins selon la revendication 1, **caractérisé en ce que** les brins (46, 49; 44, 48) des couches individuelles du support de traction sont conçus d'une part comme des brins métalliques (46, 49) et d'autre part comme des brins non métalliques (44, 48).

3. Câble pour travaux sous-marins selon la revendication 1 ou 2, **caractérisé en ce qu'**au moins une couche formée de plusieurs brins non métalliques (44, 48) ou uniquement de ceux-ci est disposée autour de l'âme (11), lesquels sont entourés d'au moins une couche extérieure de brins exclusivement métalliques (46, 49) .

4. Câble pour travaux sous-marins selon la revendication 1, **caractérisé en ce qu'**au moins une couche intermédiaire et/ou couche protectrice (45) sont disposées entre l'au moins une couche formée de plusieurs brins non métalliques (44, 48) et la couche extérieure de brins métalliques (46, 49, 55).

5. Câble pour travaux sous-marins selon l'une des revendications précédentes, **caractérisé en ce que** les brins non métalliques (44, 48) ont une section transversale pleine.

6. Câble pour travaux sous-marins selon l'une des revendications précédentes, **caractérisé en ce que** l'au moins un brin non métallique (44, 48) est formé de fibres de carbone disposées suivant une matrice.

7. Câble pour travaux sous-marins selon la revendication 6, **caractérisé en ce que** l'au moins un brin non métallique (44, 48) est formé d'un grand nombre de fibres de carbone noyées et/ou maintenues ensemble dans la matrice.

8. Câble pour travaux sous-marins selon l'une des revendications 6 ou 7, **caractérisé en ce que** la matrice enrobant et/ou maintenant ensemble les fibres de carbone de l'au moins un brin non métallique (44, 48) est formée à partir de résine époxy.

9. Câble pour travaux sous-marins selon l'une des revendications précédentes, **caractérisé en ce que** les brins métalliques (46, 49) ont une section transversale pleine du fait qu'ils sont conçus comme des fils en acier et/ou la couche intermédiaire, la couche protectrice (45), le revêtement et/ou l'enveloppe (50) sont formés à partir d'une matière synthétique ou d'un élastomère déformable élastiquement.
